(19) Europäisches Patentamt
European Patent Office
Office européen des brevets

(11) **EP 4 748 273 A1**

(12) **EUROPEAN PATENT APPLICATION**

(43) Date of publication:
**27.05.2026 Bulletin 2026/22**

(21) Application number: **24214610.8**

(22) Date of filing: **21.11.2024**

(51) International Patent Classification (IPC):
**A46B 15/00** (2006.01)

(52) Cooperative Patent Classification (CPC):
**A46B 15/004; A46B 15/0044; A46B 15/0046;
A61C 17/225;** A46B 2200/1066

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AE Eindhoven (NL)**

(72) Inventors:
• **KULAS, Alexandra
  Eindhoven (NL)**
• **HIRSCH, Kelly Laurence
  Eindhoven (NL)**

(74) Representative: **Philips Intellectual Property &
Standards
High Tech Campus 52
5656 AG Eindhoven (NL)**

(54) **DEVICES AND METHODS FOR DETECTING WATER INGRESS IN PERSONAL CARE DEVICES**

(57) A personal care device includes a housing, a relative humidity sensor disposed within the housing, and a processor disposed within the housing and configured to monitor a rate of change of relative humidity within the housing using an output from the humidity sensor, and generate a water ingress alarm when the rate of change of relative humidity exceeds a predetermined first threshold. The personal care device may further include a temperature sensor disposed within the housing. In this case, the processor may be further configured to monitor a rate of change of temperature within the housing using an output from the temperature sensor, and generate the water ingress alert when both the rate of change of relative humidity exceeds the predetermined first threshold and the rate of change of temperature is below a predetermined second threshold.

FIG.1

EP 4 748 273 A1

**Description**

FIELD OF THE INVENTION

The inventive concepts relate to personal care devices, and more particularly to a system and method for detecting water ingress in personal care devices using humidity sensors.

BACKGROUND OF THE INVENTION

Personal care devices, such as power toothbrushes, have become increasingly popular for maintaining oral hygiene. These electro-mechanical devices typically consist of a handle containing a motor, battery, and electronic components, protected by an outer plastic shell. The handle is designed to be sealed from the external environment to prevent water ingress, which can damage the internal electronic components.

Water ingress is a common issue faced by manufacturers of personal care devices. The internal electronic components generally have limited resistance to humidity, especially when exposed to water containing conductive contaminants. When water enters the device due to seal damage or other causes, it can lead to corrosion of metallic elements or current flow through ions deposited on the circuit board. This often results in permanent damage to the internal components, requiring costly repairs or replacement of the entire device.

The harsh environment in which personal care devices are typically used presents unique challenges. These devices are frequently exposed to water, toothpaste residue, and vibration during normal use. The interface between removable parts, such as a brush head and the handle, can accumulate dried toothpaste and mold, potentially leading to seal damage when users attempt to clean this area. Additionally, the buttons and other openings on the device housing can become points of entry for moisture.

SUMMARY OF THE INVENTION

According to an aspect of the inventive concepts, a personal care device is provided which includes a housing, a relative humidity sensor disposed within the housing, and a processor disposed within the housing and configured to monitor a rate of change of relative humidity within the housing using an output from the humidity sensor, and generate a water ingress alarm when the rate of change of relative humidity exceeds a predetermined first threshold.

The personal care device may further include a temperature sensor disposed within the housing. In this case, the processor may be further configured to monitor a rate of change of temperature within the housing using an output from the temperature sensor, and generate the water ingress alert when both the rate of change of relative humidity exceeds the predetermined first threshold and the rate of change of temperature is below a predetermined second threshold.

The housing may be a detachable handle of the personal care device. The personal care device may be a power toothbrush.

The relative humidity sensor, the temperature sensor and the processor may be mounted on a printed circuit board assembly within the housing.

The personal care device may further include a motor within the housing, and the processor may be configured to monitor the rates of change of the relative humidity and the temperature when the motor is in an ON state.

The personal care device may further include a pressure valve installed in the housing.

According to another aspect of the inventive concepts, a power toothbrush is provided and includes a handle, a detachable brush head configured for detachable connection to the handle, a water ingress seal at an interface between the handle and the brush head, a relative humidity sensor contained within the handle, a temperature sensor contained within the handle, and a processor operatively connected to the relative humidity sensor and the temperature sensor. The processor is configured to generate a water ingress alarm when both a rate of change of relative humidity within the handle exceeds a first threshold and a rate of change of temperature within the handle is less than a second threshold.

The power toothbrush may further include a non-volatile memory within the handle storing the first and second thresholds.

The power toothbrush may further include a motor within the handle. In this case, the processor may be configured to retrieve the first and second thresholds from the non-volatile memory, determine whether the motor is in an ON state, and in response to determining that the motor is in an ON state, determine the rate of change of relative humidity and the rate of change of temperature within the handle.

The processor may be configured determine the rate of change of relative humidity and the rate of change of temperature within the handle by storing successive outputs of the relative humidity sensor and successive outputs of the temperature sensor in a memory buffer, and calculating the rate of change of relative humidity and the rate of change of temperature within the handle in response to the buffer memory becoming full.

The power toothbrush may further include a pressure valve installed in the handle.

According to yet another aspect of the inventive concepts, a method for detecting water ingress in a personal care device is provided. The method includes monitoring a rate of change of relative humidity within a housing of the personal care device using a humidity sensor, and generating a water ingress alert when the rate of change of relative humidity exceeds a first threshold.

The method may further include monitoring a rate of change of temperature within the housing using a temperature sensor, and generating the water ingress alert when both the rate of change of relative humidity exceeds the predetermined humidity threshold and the rate of change of temperature is below a second threshold.

The personal care device may be a power toothbrush. In this case, the housing may be a detachable handle of the power toothbrush, and the handle may include a pressure valve, a motor and circuitry for driving the motor.

BRIEF DESCRIPTION OF THE DRAWINGS

The above and other aspects and features of the inventive concepts will become readily apparent from the detailed description that follows, with reference to the accompanying drawings, in which:

FIG. 1 is a schematic view showing an example of a power toothbrush (PTB) according to embodiments of the inventive concepts;

FIG. 2 is a simplified circuit block diagram of the circuit components contained within the handle of the PTB according to embodiments of the inventive concepts;

FIG. 3 is an interactive psychrometric chart of humid air;

FIG. 4 is a graph of experimental test results showing changes in relative humidity (RH) over time through a Gore® vent of a PTB handle and after an endcap of the PTB handle has been removed;

FIG. 5 is a graph of experimental test results showing changes in RH and temperature over time after injecting a given amount of water into the handle of the PTB;

FIG. 6 is another interactive psychrometric chart of humid air;

FIG. 7 is a graph of experimental test results showing changes in RH and temperature over time during a cold water rinse simulation in which a sensor assembly was in contact with the housing of the PTB handle;

FIG. 8 is a graph of experimental test results showing changes in RH and temperature over time during a cold water rinse simulation in which a sensor assembly was in the middle of the housing of the PTB handle;

FIG. 9 is a flowchart for reference in describing a method for the early detection of water ingress into a PTB handle according to embodiments of the inventive concepts;

FIG. 10 is a flowchart for reference in describing another method for the early detection of water ingress into a PTB handle according to embodiments of the inventive concepts; and

FIG. 11 is a flowchart for reference in describing another method for the early detection of water ingress into a PTB handle according to embodiments of the inventive concepts.

DETAILED DESCRIPTION

In the following detailed description, for purposes of explanation and not limitation, representative embodiments disclosing specific details are set forth in order to provide a thorough understanding of an embodiment according to the present teachings. Descriptions of known systems, devices, materials, methods of operation and methods of manufacture may be omitted so as to avoid obscuring the description of the representative embodiments. Nonetheless, systems, devices, materials and methods that are within the purview of one of ordinary skill in the art are within the scope of the present teachings and may be used in accordance with the representative embodiments. It is to be understood that the terminology used herein is for purposes of describing particular embodiments only and is not intended to be limiting. The defined terms are in addition to the technical and scientific meanings of the defined terms as commonly understood and accepted in the technical field of the present teachings.

It will be understood that, although the terms first, second, third etc. may be used herein to describe various elements or components, these elements or components should not be limited by these terms. These terms are only used to distinguish one element or component from another element or component. Thus, a first element or component discussed below could be termed a second element or component without departing from the teachings of the present disclosure.

The terminology used herein is for purposes of describing particular embodiments only and is not intended to be limiting. As used in the specification and appended claims, the singular forms of terms "a," "an" and "the" are intended to include both singular and plural forms, unless the context clearly dictates otherwise. Additionally, the terms "comprises," and/or "comprising," and/or similar terms when used in this specification, specify the presence of stated features, elements, and/or components, but do not preclude the presence or addition of one or more other features, elements, components, and/or groups thereof. As used herein, the term "and/or" includes any and all combinations of one or more of the associated listed items.

Unless otherwise noted, when an element or component is said to be "connected to," "coupled to," or "adjacent to" another element or component, it will be understood that the element or component can be directly connected or coupled to the other element or component, or intervening elements or components may be present. That is, these and similar terms encompass cases where one or more intermediate elements or components may be employed to connect two elements or components. However, when an element or component is said to be "directly connected" to another element or component, this encompasses only cases where the two elements or components are connected to each other without any intermediate or intervening elements or components.

Relative terms, such as "above," "below," "top," "bottom," "upper" and "lower" may be used to describe the various elements' relationships to one another, as illustrated in the accompanying drawings. These relative terms are intended to encompass different orientations of the device and/or elements in addition to the orientation depicted in the drawings. For example, if the device were inverted with respect to the view in the drawings, an element described as "above" another element, for example, would now be "below" that element. Similarly, if the device were rotated by 90° with respect to the view in the drawings, an element described "above" or "below" another element would now be "adjacent" to the other element; where "adjacent" means either abutting the other element, or having one or more layers, materials, structures, etc., between the elements.

The drawings may in some cases focus on structural features of embodiments of the inventive concepts. However, the drawings may not be drawn to scale, and relative dimensions of different structural elements may differ from those depicted in the drawings. Further, throughout the drawings, like reference numbers refer to the same or similar elements.

Detecting water ingress before it causes significant damage to internal components would be advantageous for extending the lifespan of personal care devices and reducing waste. Early detection could allow for timely repairs, focusing on replacing damaged seals rather than entire circuit boards or motors. This approach not only reduces repair costs but also aligns with growing environmental concerns and emerging right-to-repair regulations.

Current methods for protecting electronic components in personal care devices, such as conformal coatings, can be expensive and may complicate repairs. Furthermore, existing devices often lack effective means for early detection of water ingress, leaving users unaware of potential damage until the device fails completely.

As personal care devices continue to evolve and incorporate more advanced electronic components, the need for improved water ingress detection and prevention methods becomes increasingly important. Addressing this challenge could lead to more durable products, reduced repair costs, and improved environmental sustainability in the personal care device industry.

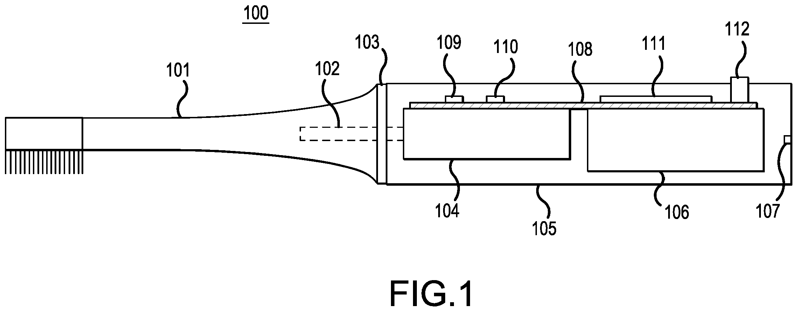

FIG. 1 is a schematic view showing an example of a power toothbrush (PTB) according to embodiments of the inventive concepts.

The outer contour of the PTB 100 illustrated FIG. 1 is merely an example. It will be understood that PTBs come in a wide variety of shapes and sizes, and that the inventive concepts are not limited to any particular PTB design. Likewise, the shapes, relative sizes, locations and orientations of the internal components of the PTB 100 are not limited to those illustrated in the schematic example of FIG. 1. Rather, FIG. 1 is presented for contextual purposes only in the discussion of the inventive concepts that follows.

Referring to FIG. 1, the PTB 100 includes a brush head 101 and a handle 105. As is understood in the art, the brush head 101 is detachable from the handle 105. This is to facilitate easy replacement of the brush head 101, as brush heads generally have a limited lifespan and require periodic replacement.

A seal 103 is located at the interface between the brush head 101 and the handle 105. The seal 103 is intended to inhibit the flow of water and contaminants into the handle 105 during use and cleaning of the PTB 100.

The handle 105 houses a number of components, including a motor 104, main printed circuit board (PCBA) 108 and microprocessor 111. In this example, the microprocessor 111 is operatively connected to the motor 104 through the PCBA 108, and controls the motor 104 to drive a motor shaft 102. Although not shown, the motor shaft 102 reciprocates, vibrates and/or rotates the bristle portion of the brush head 101 using mechanisms that are well known in the art. The battery 106 supplies the necessary power to the components within the handle 105.

Reference number 107 of FIG. 1 denotes a vent, such as a Gore® vent. Such vents are often used in electric toothbrush handles to help with pressure equalization and condensation reduction. These vents allow air to pass through while keeping out water and other contaminants, which helps maintain the internal components of the toothbrush and prolong its lifespan.

In accordance with embodiments of the inventive concepts, additional components mounted to the PCBA 108 include a relative humidity (RH) sensor 109, a temperature sensor 110, and a light-emitting-diode (LED) alarm 112, all operatively connected to the microprocessor 111. These features of the inventive concepts will be described in detail later herein.

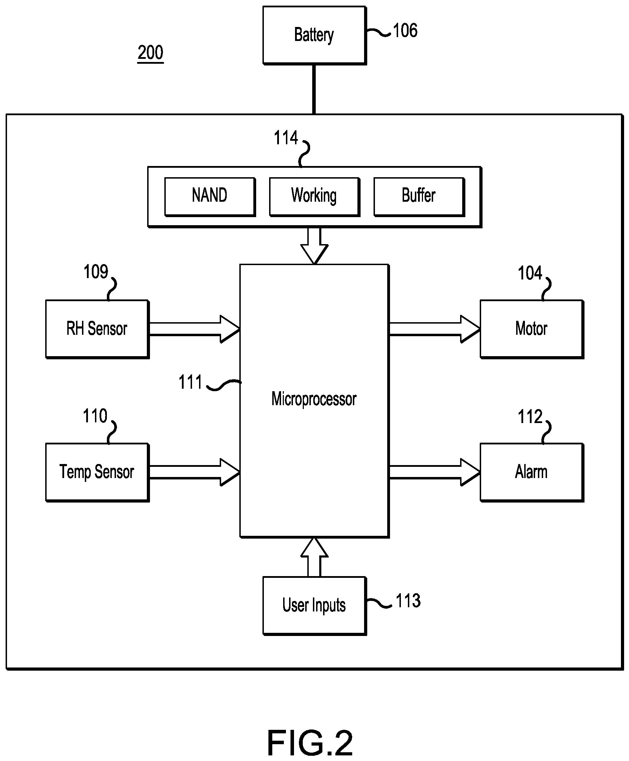

FIG. 2 is a simplified circuit block diagram of the circuit components 200 contained within the handle 105.

Referring collectively to FIGS. 1 and 2, the microprocessor 111 is responsive to user inputs to control the motor 104 so as to drive the drive shaft 102 as described above. Connected to the microprocessor 111 are one or more memories 114. An example of the one or more memories 114 include non-volatile memory (e.g., NAND memory) storing programs, applications, device-specific data constants, and the like. Another example is a working memory of the microprocessor when executing the programs or applications. Yet another example is one or more buffer memories for temporarily storing sensor data and the like.

Further, in accordance with embodiments of the inventive concepts, the microprocessor 111 receives data indicative of the relative humidity (RH) within the handle 105 from the RH sensor 109, and data indicative of the temperature within the handle 105 from the temperature sensor 110. As will be described in detail below, the microprocessor 111 processes the RH data and the temperature data to selectively activate the alarm 112.

While the temperature sensor 110 and the RH sensor 109 are illustrated as separate components in FIG. 1 and 2, it will be understood that these components can be combined into a single device mounted on the PCBA 108. As such, the descriptions herein of a temperature sensor and an RH sensor should be construed as both separate sensors for temperature and relative humidity detection, and a combined sensor for temperature and relative humidity detection.

Separately, the water ingress alarm 112 is described above as an LED. The inventive concepts are not limited in this manner. The water ingress alarm can be any device that emits light and/or flashes, or any device that emits sound, or any device that causes vibration of the PTB 100, or any combination of such devices. Further, the alarm can be remote from the PTB 100. For example, the alarm device can be embedded in the charger of the PTB 100. As other examples, the alarm can appear as a notification in a mobile phone app or smart mirror in Blue-Tooth communication with the PTB 100, or in an email message to the user.

The inventive concepts are directed to techniques for the early detection of water ingress into the handle 105, and to informing that user of such water ingress so that remedial action can be taken.

It is generally accepted that RH above 50% can cause failures in exposed electronic circuits, depending on the cleanliness of the PCBA 108. Failures become more likely when voltage is applied to a circuit operating at elevated temperature in the presence of RH above 50%. (For most PTBs, the internal temperature increases by at least 10°C during use due to power dissipated by the motor 104 and motor control circuitry.)

Embodiments of the inventive concepts focus on detecting the rate of change of the internal PTB humidity, instead of the absolute value of humidity. In order to understand the adoption of this approach, some of the basic concepts of humidity measurements are reviewed below along with a few scenarios where water ingress should be detected.

The total amount of water in the air is called absolute humidity (AH), expressed as grams of water per cubic meter of air. It can also be expressed as grams of water per kg of air so that one can calculate the AH at different altitudes by converting a kg of air to cubic meters of air using the local altitude. This approach prevents errors at higher elevations. For example, Redmond, Washington has an altitude of 500 ft (or 152.4 meters); Bolder, Colorado is over 5000 ft (or 1542 meters). Calculating AH using a cubic meter of air in both cases would cause a 15% error for the higher elevation. Therefore, it is more accurate to use the AH expressed as g/kg so that the correct air density can be used to calculate the total amount of water in the air.

However, in the context of the present inventive concepts, the density of air can be ignored because changes in density always occur very slowly for normal PTB use cases. On the other hand, since temperature can change rapidly (from rinsing the PTB for example), it is preferable to know the temperature of the air inside the PTB to calculate the total amount of water in the air. This is because warm air holds more water than cold air.

Sensors that can measure AH use a hermetically sealed chamber filled with dry nitrogen (as a reference) and another chamber exposed to the environment. There is a probe in each chamber that measures the thermal conductivity of the air. The difference between the resistance of each probe is proportional to AH.

RH sensors indicate the amount of water in the air expressed as a ratio to the maximum amount of water the air can hold (at a particular temperature). Sensors that measure RH are much less complicated (and less expensive) than AH sensors.

The most common type of RH sensor is based on capacitance between two electrodes separated by a thin layer of film that attracts moisture from the air. As the humidity in the air changes, the film layer will absorb (or release) water from the air. The amount of water in the film changes the capacitance between the two electrodes. Therefore, the capacitance is directly proportional to RH.

Applying those basic concepts to the present inventive concepts, the embodiments herein use a low-cost RH sensor to measure AH. This is because the volume of air inside the PTB is a known quantity, and the temperature inside the PTB is known from measurement by the temperature sensor.

The internal volume of air in a PTB is very small after all the components have been assembled into the housing. That is, most of the volume is taken up by the motor 104, battery 106, main printed circuit board (PCB) 108 and structural parts (not shown in the figures) to hold components in place. Because of this small internal volume, a small amount of water can cause an RH of 100% inside a PTB. For example, the inventors measured the internal volume of a PTB (with all internal components installed) by pouring water inside and then measuring the amount of water it took to fill the PTB. In one case, the PTB only held 36 ml of water which is equivalent to a volume of 36 cubic cm.

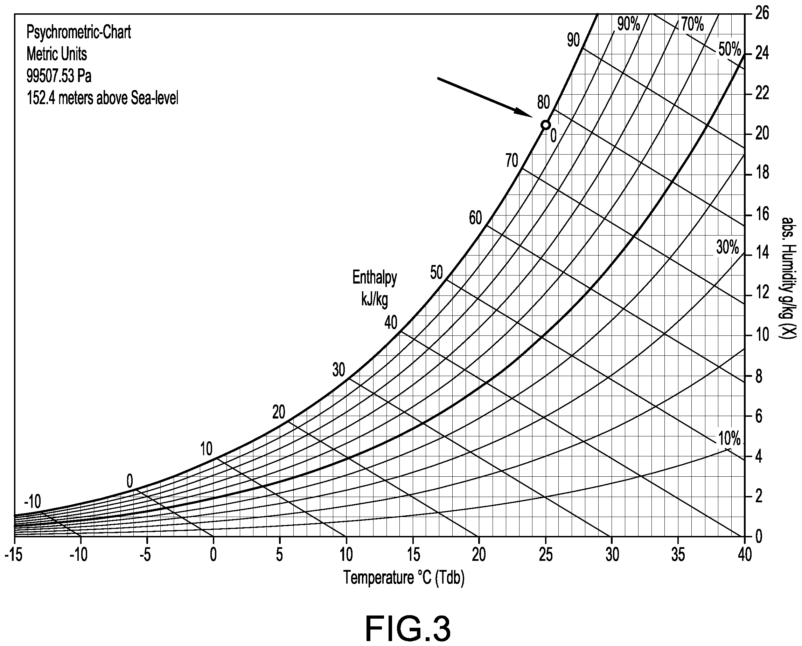

FIG. 3 is an interactive psychrometric chart of humid air. On the chart, a reference point was added for 25°C, and 100% humidity, at an altitude of 500 feet (154 meters). That point, indicated by a small circle highlighted by the arrow, corresponds to an AH value of 20.5 grams of water per kg of air. (See the vertical axis on the right.) Since the density of air at 154 m elevation is 1.149 kg/m$^3$, multiplying 20.5 g/kg of water times 1.149 kg/m$^3$ equals 23.55 grams of water per cubic meter of air. Since 1 cubic meter is $1 \times 10^6$ cubic cm, the amount of water in the air (100% RH at 25°C) in a PTB handle with an internal air volume of 36 cubic cm would be:

$$Total\ water\ (mL) = 23.55\ gm/m^3\ \cdot\ \frac{1mL}{gm}\ \cdot\ \frac{1\ m^3}{10^6\ cm^3}\ \cdot\ 36\ cm^3 = 0.000848\ mL$$

So, at 25°C, it takes less than a gram of water to saturate the air inside a PTB and cause 100% RH.

Like the PTB 100 of FIG. 1, most PTBs have a Gore® vent (or pressure vent) installed at the bottom of the PTB handle 105. As such, the internal RH will slowly track the external RH as water vapor passes into or out of the Gore® vent. Therefore, when the handle 105 is exposed to a humid environment, a slow increase of RH inside the PTB 100 is expected. In a very humid environment, the internal RH could get above 90% RH for example. If the value of RH is used to detect water ingress, false alarms could result whenever the PTB 100 was used in a humid environment. However, if there is a tear in one of the seals (e.g., the seal 103 of FIG. 1), this change in humidity would be much faster. As such, inventive concepts indicate a possible seal failure causing water ingress when the rate of change of the humidity is high.

Consider two scenarios: (1) The user is brushing their teeth in a humid bathroom environment and then cleans their PTB. During the cleaning, they damage the top seal. Even if no water gets through the opening in the seal, the opening will still let in humid air causing the humidity inside the PTB to increase much faster than the Gore vent would allow, triggering the water ingress alarm. (2) The user brushes their teeth in an environment with the same humidity as inside the PTB. Again, they tear the seal while cleaning after brushing. Since the humidity inside and outside are similar, no water ingress alarm is triggered. However, the next time they use their PTB, water will get inside and cause the internal RH to rapidly increase at a rate that triggers the water ingress alarm.

To verify the utility of the inventive concepts, a few prototypes were built using an analog output humidity sensor that was attached to the main PCBA inside of a PTB. Three wires are required to run the sensor, so those wires were brought out the end cap through small holes; the holes were epoxied to provide strain relief for the wires and to provide a hermetic seal.

Note that the analog output is appropriate for a quick prototype, but in preferred embodiments the humidity sensor 109 (either alone or combined with a temperature sensor) would have a digital output. As suggested previously, a temperature sensor is also preferrable to compensate the RH reading as temperature changes. However, this compensation equation is usually provided by the manufacturer of the RH sensor.

For the first scenario where the rate of change of RH inside the PTB when used in a humid environment is to be measured, the inventors placed the test PTB in a glass jar and filled the jar with enough water to create 100% RH. The inventors sealed the jar and monitored RH. After a few days, the inventors opened the jar and partially removed the end cap to create a small opening at the bottom of the PTB where the endcap is installed. The inventors resealed the jar and continued monitoring internal RH.

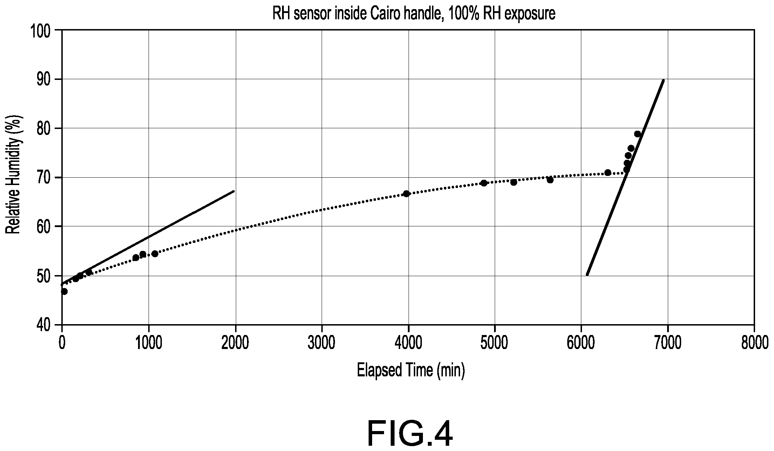

FIG. 4 shows the results of this test. Namely, FIG. 4 shows the RH vs time for the Gore® vent only (dots on the dashed line between 0 and about 6500 minutes) and for the open endcap (dots after about 6500 minutes). The straight line shown at the beginning of the data has a slope of about 0.01% RH per minute. After the endcap is open, the slope increases to 0.04% per minute as shown by the straight line to the right.

As expected, the rate of change was much higher after the inventors opened the end cap. The rate of change through only the Gore® vent was approximately 0.01% RH change per minute at the beginning of the test, then slowed down to about 0.004% RH change per minute just before the end cap was opened. The rate of RH with an opening at the endcap was much faster, i.e., in this case the inventors measured about 0.04% RH change per minute. Clearly, an internal RH sensor can be used to distinguish these slow and fast changes in RH.

For the second scenario, the objective is to measure rate of change of humidity, due to water ingress. Here, the inventors modified the experimental study by making a couple of changes. First, the inventors added an NTC temp sensor on the same (very small) breakout board as the RH sensor to get a better measurement by having the temp sensor close to the RH sensor. Second, the inventors removed the internal assembly (motor, battery, and main PCBA) so that it would not be damaged during this test. Laying the housing down on a desktop, the inventors taped the new sensor assembly inside the upper part of housing and sealed the housing with Kapton tape. Without the internal components, the volume of air inside the housing is 64 cubic cm. Using the same water content as above for 100% RH at 25°C, the inventors calculated only 0.0015 mL of water would be needed to get 100% RH.

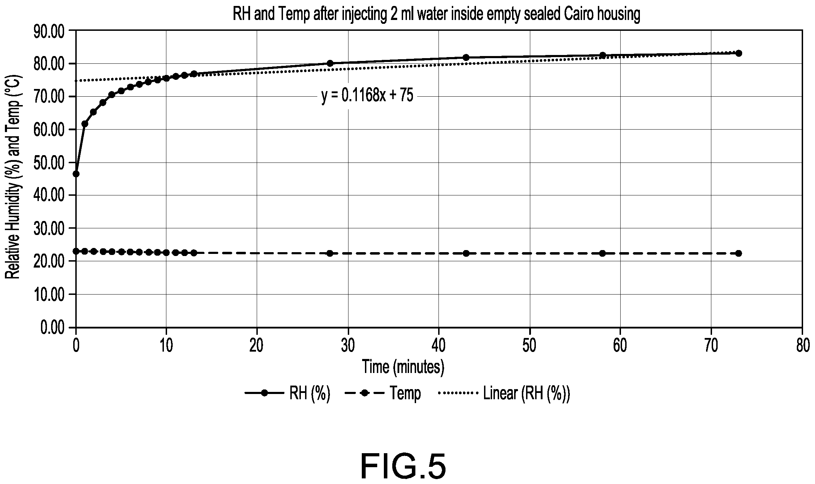

The inventors used a syringe to inject 2 ml of water into the housing through an endcap screw hole. FIG. 5 shows the rapid change in RH (top line) after the water was added (much higher than for scenario 1 as one would expect). Clearly, an internal RH sensor can be used to detect water ingress. Note that even after 30 minutes the rise in RH is 0.12% per minute as shown in FIG. 5. Of course, very little of the water evaporated in this experiment. The temperature (bottom line) remained constant.

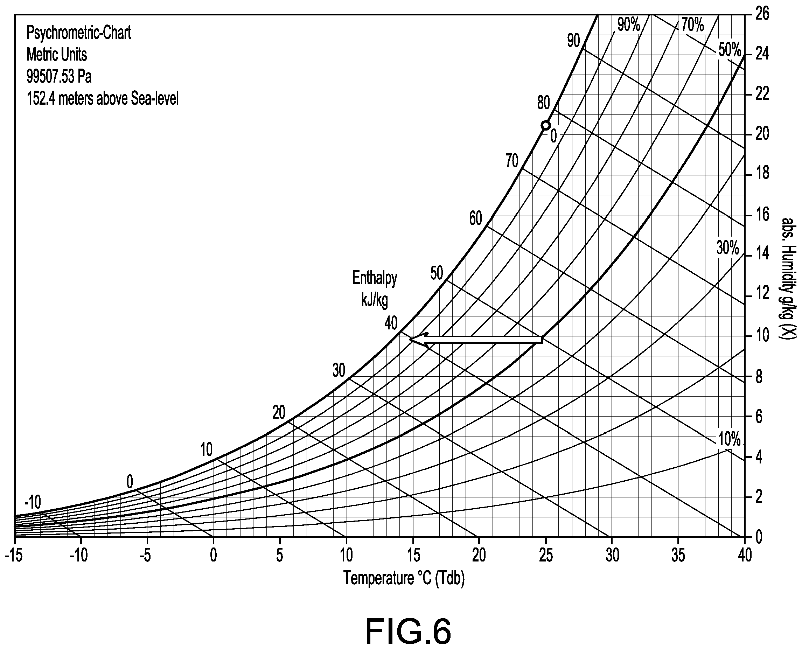

A potential challenge with measuring RH in a PTB with a small internal air volume is that rinsing the handle in cold water can cause a rapid increase in RH. As mentioned above, warm air holds more water than cold air. For example, referring to the psychrometric chart FIG. 6, on the horizontal line that represents water content of 10 g/kg an arrow is added showing the increase of RH due to a decrease in temperature. At room temp of 25°C the psychrometric chart shows the horizontal line intersects the RH curve for 50% RH. But if the PTB was rinsed in cold water that was 15°C, the internal temperature would eventually drop to 15°C. If the change in temperature was fast, very little water vapor would diffuse through the Gore® vent. Therefore, one would see a rapid change in RH from 50% to over 90%.

However, the thermal time constant for heat to flow through the housing material and into the internal air and internal assembly is on the order of 3 minutes based on previous measurements on the PTB housing. So, it would take five time-constants (15 minutes) to come into thermal equilibrium. And depending on where the RH sensor and temperature sensor are located, the measured value of RH could change rapidly in either direction.

So the challenge becomes how to keep the transient effects of temperature change from triggering an alarm level of say 0.02% RH change per minute. In a perfectly isothermal system, one would know the temperature and could calculate from the new RH value that the total amount of water inside the PTB has not changed, so no alarm for water ingress would be triggered. But a PTB exposed to a cold (or hot) water rinse is not in thermal equilibrium. The motor assembly inside the PTB has a large thermal mass connected to the housing through materials with various thermal resistances. Depending on the thermal mass of the RH sensor itself and where/how it is attached to the internal assembly, the indicated RH could change rapidly in either direction.

To show some extreme examples of transient thermal effects, the inventors performed two experiments with the internal assembly removed from a PTB, leaving only an empty housing. Removing the internal assembly in this manner greatly reduces the thermal mass inside the PTB so the internal air will change temperature faster if cold water is poured on the outside of the handle.

For both experiments the inventors used the RH sensor that includes the NTC temp sensor (as discussed for the second scenario above). For the first experiment, the inventors attached the RH sensor assembly to the inside of the housing in the middle about 2-inches from the bottom of housing using Kapton tape, being careful not to cover the RH sensor.

For the second experiment, the inventors wedged the sensor assembly inside of a (donut shaped) rubber grommet that had an outside diameter that matched the inside diameter of the housing. The inventors then pushed the grommet and sensor assembly about 2-inches into the housing from the bottom.

For both experiments the inventors routed the wires out the bottom and placed the endcap on. In addition, the inventors sealed the top and bottom of the handle with Kapton tape to assure no water leaked into the housing during the tests. No water was added inside the housing for both experiments.

For each test, the inventors started logging RH and temperature data. After about a minute or so, the inventors emersed all but the last ½-inch of the housing into cold tap water. For the first experiment, the tap water was measured to be 53°F (11.7 °C); for the second experiment, the water was measured to be 51°F (10.6 °C).

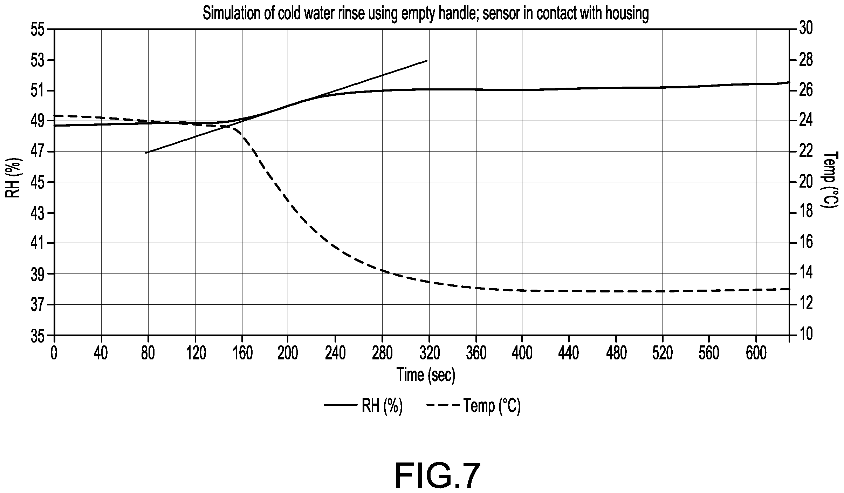

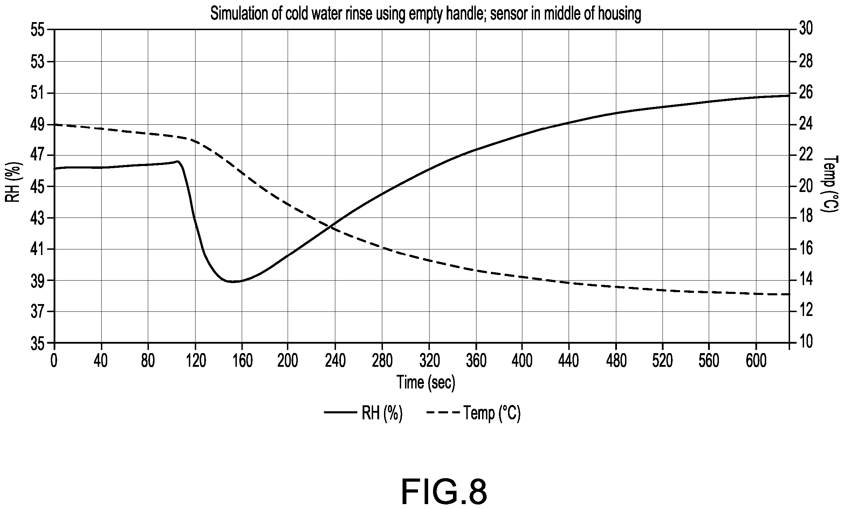

FIG. 7 shows the results of the first experiment where the sensor assembly was in contact with the housing, and FIG. 8 shows the results of the second experiment where the sensor assembly was held by a rubber grommet so that it was not in contact with the housing.

In FIG. 7, the line that drops over time is temperature and the line that increases somewhat is RH. The straight line segment in FIG. 7 is the slope of the RH increase immediately after the housing was emersed in cold tap water. The slope of the straight line is about 1.5% RH per minute.

In FIG. 8, the line that drops over time is temperature, and the line that drops initially and then increases is RH.

For both experiments the data was averaged over 2 seconds per measurement. For FIG. 7, the cold-water exposure started 140 seconds after data logging started. For FIG. 8, the exposure started 100 seconds after data logging began.

To understand these very different results, one needs to consider the location of the RH sensor assembly and the potential for condensation given the temperature of the cold water.

Referring back to FIG. 6, the arrow shows the change in RH when the temperature changes from 25°C to 15°C. However, in the experiments, the water was colder than 15°C. As can be seen in FIG. 6, when the temperature of the air drops below 14°C, the air becomes saturated (100% RH). Further reduction in temperature will then cause condensation on the coldest surfaces, which is what happened in these experiments.

Looking at the results in FIG. 8 first, one can see the sudden drop in RH in the middle of the housing where the RH sensor is located. This drop occurs because the water vapor inside the housing started condensing on the inside of the housing. Once that happens, water vapor in the center of the housing will diffuse to the outside where the air close to the housing has been depleted of water vapor due to condensation.

On the other hand, in FIG. 7 where the sensor is close to the inside of the housing, the temperature is changing much faster, but the RH is slowly increasing. Again, this is because water vapor is diffusing toward the housing, causing the RH to increase in the cold air that is close to the cold housing.

To summarize, considering the effects of cold (or hot) water rinsing of a PTB, to properly detect water ingress one also needs to use the rate of temperature to qualify a true alarm for water ingress. For example, the experiments shown in FIGS. 7 and 8 would not cause an ingress alarm because the rate of change of temperature is too high. Looking at the rate of change of both RH and temperature at the end of FIG. 7, one can find that the RH is changing at 0.198 %/minute while the temperature is changing at 0.048°C/minute. Therefore, in the example configurations, applying a maximum rate of temperature change for a valid water ingress alarm at 0.025°C/minute would prevent false triggering.

Some embodiments of the inventive concepts utilized an RH sensor and temperature sensor to detect changes in the RH inside the PTB housing. In addition, a mechanism is provided to inform the user that the rate of change of RH has increased beyond limit (that is based on the amount of air inside the PTB). This warning (or alarm) can be implemented using an on-handle display or a connected app. Other types of haptic feedback could also be used such as modulation of the motor or flashing lights embedded in the PTB. As previously discussed, the inventive concepts are not limited by the manner in which the alarm condition is presented to the user.

The required action by the user in response to the alarm may involve sending the handle in for service and repair.

By inspection, one can see from these constant temperature experimental results shown previously that an alarm level for the rate of change in RH of 0.02% per minute would only trigger when there was an opening in the seal or other damage occured that allowed water to be trapped inside the handle.

For the experiments with cold water rinse, one can see the rate of change in RH is much higher than this limit. Therefore, embodiments utilize a temperature sensor to qualify any alarm by making sure the temperature change of the air inside the PTB is less than 0.025°C/min for a valid alarm. With these alarm parameters (> 0.02% RH per minute and < 0.025 °C/min), the results shown in FIGS. 7 and 8 would not have triggered a water ingress alarm, but the results shown in FIG 5 would have triggered an alarm.

Note these parameters are an example for the PTB used in by the inventors in the experiments. These alarm parameters are expected to be different for each type of personal care device due to, for example, the difference in internal air volume and Gore® vent size (if any).

As discussed above, the inventive concepts utilize the rate of change of relative humidity (RH) inside the Power Tooth Brush (PTB) housing instead of an absolute value of relative humidity. The reasons for this include:

1. The Gore® vent at the bottom of the PTB will allow water vapor to enter or escape, depending on the ambient RH level. If the user is brushing in a humid environment then water vapor will diffuse through the vent into the housing which increases the RH. Warm air holds more moisture than cold air so more water vapor can enter in warmer ambient conditions.

2. Some users brush their teeth in the shower where the humidity can be 100% RH which causes more water vapor to diffuse into the housing, raising the RH above the ambient level.

3. Although not previously discussed, the inventors have discovered that the plastic housing of the PTB can absorb water vapor up to about 1% (by weight) for some plastics. When water vapor enters through the Gore® vent, some of the water vapor will be absorbed into the plastic housing. Then when the user picks up the housing, their hand warms up the housing. Since plastics do not absorb as much water when heated, the increase in temperature will force water out of the plastic housing which in turn increases the RH inside the housing.

As such, because of the effects listed above, embodiments herein use a rate of change in RH to trigger an alarm for the onset of water ingress. When water enters the housing (through a torn seal for example) it starts to evaporate which causes a rapid increase in RH. This rate of increase is much higher than the rate of RH increase due to diffusion through the Gore® vent. The RH inside the housing will eventually reach 100% RH if more than a few grams of water get inside the housing of the PTB. Also, the concentration of water vapor is evenly distributed inside the handle due to diffusion through the air; it doesn't really matter where the RH sensor is located. Nonetheless, it may be preferred to have the RH sensor closer to the top seal away from the Gore® vent and away from the middle of the housing where a user warms up the housing when holding the PTB. The temp sensor should preferably be located close to the humidity sensor. It is also preferrable not to have the humidity sensor close to the housing where condensation or outgassing can occur.

Assuming the RH sensor is not attached to the housing, the rate used to trigger the water ingress alarm depends on the volume of air inside the housing. As the volume decreases, the alarm rate is set to a limit higher since it takes less water vapor to increase the RH of smaller volumes of air. The other effects enumerated above can also increase the rate of increasing RH. In addition, as shown above, rapid changes in temperature can cause rapid changes of RH since warm air holds more water than cold air. There are many use cases where the temperature can change rapidly, such as rinsing the PTB in cold water after brushing. Therefore, as discussed above, in addition to selecting a rate of change of RH to trigger a water ingress alarm, embodiments of the inventive concepts also have a limit for the rate of change of temperature.

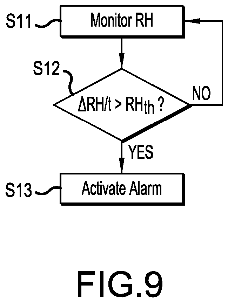

FIG. 9 is a flowchart for reference in describing a method for detecting water ingress in a PTB in accordance with embodiments of the inventive concepts.

Referring to FIG. 9, at operation S 11, the relative humidity (RH) within the PTB handle is monitored. This may be accomplished by using the RH sensor 109 as described previously in connection with FIGS. 1 and 2.

At operation S12, a determination is made as to whether a rate-of-change of the relative humidity ($\Delta$RH/t) is greater than an RH threshold (RH$_{th}$). This may be accomplished by the microprocessor 111 described previously in connection with FIGS. 1 and 2. In one example given above, RH$_{th}$ is 0.02% RH per minute, but the inventive concepts are not limited to that specific example. In the case where $\Delta$RH/t is not greater than RH$_{th}$, the process returns to operation S11 to continue monitoring of the RH within the PTB handle.

On the other hand, in the case where $\Delta$RH/t is greater than RH$_{th}$, the process proceeds to operation S13 to activate a water ingress alarm. The water ingress alarm may correspond to the LED 112 described previously in connection with FIGS. 1 and 2, but as previously discussed, the water ingress alarm is not limited to an LED.

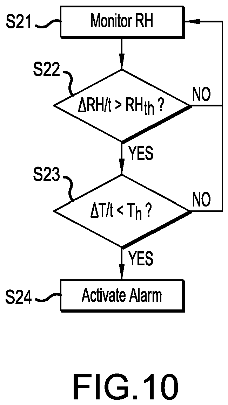

FIG. 10 is a flowchart for reference in describing another method for detecting water ingress in a PTB in accordance with embodiments of the inventive concepts.

Referring to FIG. 10, at operation S21, the relative humidity (RH) and the temperature (T) within the PTB handle are monitored. This may be accomplished by using the RH sensor 109 and a temperature sensor 110 as described previously in connection with FIGS. 1 and 2.

At operation S22, a determination is made as to whether a rate-of-change of the relative humidity ($\Delta$RH/t) is greater than an RH threshold (RH$_{th}$). This may be accomplished using the microprocessor 111 described previously in connection with FIGS. 1 and 2. In one example given above, RH$_{th}$ is 0.02% RH per minute, but again the inventive concepts are not limited to that specific example. In the case where $\Delta$RH/t is not greater than RH$_{th}$, the process returns to operation S21 to continue monitoring of the RH and temperature within the PTB handle.

On the other hand, in the case where $\Delta$RH/t is greater than RH$_{th}$, the process proceeds to operation S23 wherein a determination is made as to whether a rate-of-change of the temperature ($\Delta$RH/t) is less than a temperature threshold (T$_{th}$). This may be accomplished using the microprocessor 111 described previously in connection with FIGS. 1 and 2. In one example given above, T$_{th}$ is 0.025 °C/min, but the inventive concepts are not limited to that specific example. In the case where $\Delta$T/t is not less than T$_{th}$, the process returns to operation S21 to continue monitoring of the RH and temperature within the PTB handle.

On the other hand, in the case where $\Delta$T/t is less than T$_{th}$, the process proceeds to operation S24 to activate the water ingress alarm. The water ingress alarm may correspond to the LED 112 described previously in connection with FIGS. 1 and 2, but as previously discussed, the water ingress alarm is not limited to an LED.

It will be understood that operations S22 and S23 can be carried out in reverse order or simultaneously.

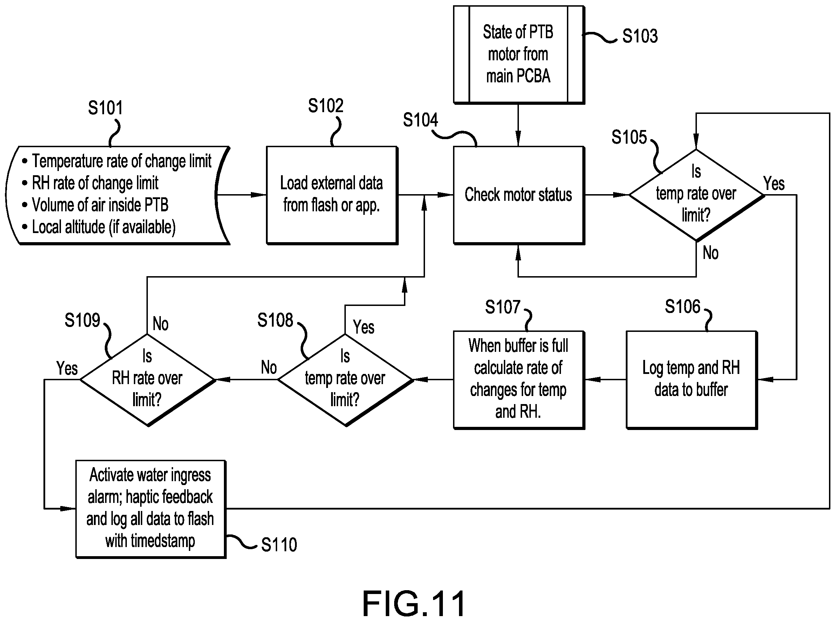

FIG. 11 is a flowchart for reference in describing another method for detecting water ingress in a PTB in accordance with embodiments of the inventive concepts. In some cases, the operations of FIG. 11 may be carried out by the microprocessor 111 mounted to the main printed circuit board assembly (PCBA) 108 within the PTB handle 105 described previously in connection with FIGS. 1 and 2. In other cases, the operations described in connection with FIG. 11 may be carried out on a subcircuit board assembly (sub-PCBA) coupled to the main PCBA and having its own microprocessor dedicated to the detection of water ingress in the PTB handle 105.

Initially, at operation S101, constants 1101 are retrieved from non-volatile memory (e.g. flash) or from an application running on the microprocessor within the PTB handle 105. These constants include the rate of change limit T$_{th}$ for temperature and the rate of change limit RH$_{th}$ for relative humidity. At operation S102, these constants 1101 are loaded into the working memory 114 of the microprocessor 111 for subsequent processing. It is noted that other constants may be loaded into memory as well, such as the volume of air inside the PTB and a local altitude.

At operation S103 of FIG. 11, an indication of the operational state of the motor 104 may be supplied from the main PCBA 108, and at operation S104 the operational state of the motor 104 as indicated by the main PCBA 108 is checked. In the case where the motor is not on (NO at 1105), the process returns to operation S104 to continue checking of the motor status.

When the motor 104 is detected as being on (YES at 1105), the process proceeds to S106 wherein the relative humidity (RH) data from the RH sensor 109 and temperature data from the temperature sensor 110 are logged into a memory buffer.

At operation S107, when the memory buffer is full, the processor uses the stored data to calculate the rate of change of the relative humidity ($\Delta$RH/t) and the rate of change of the temperature ($\Delta$RH/t). This may be done, for example, by subtracting the oldest entries into the buffer from the newest entries into the buffer, and then dividing the resultant differences by the time between storage of the oldest and newest entries (i.e., the time taken to fill the buffer).

In the case where $\Delta$RH/t is greater than RH$_{th}$, the process proceeds to operation S108 wherein a determination is made as to whether a rate-of-change of the temperature ($\Delta$RH/t) is less than a temperature threshold (T$_{th}$). In one example given above, T$_{th}$ is 1.5°C per second, but the inventive concepts are not limited to that specific example. In the case where $\Delta$T/t is not less than T$_{th}$, the process returns to operation S104 to continue monitoring of the status of the motor 104.

**EP 4 748 273 A1**

On the other hand, in the case where ∆T/t is less than $T_{th}$, the process proceeds to operation S109 where a determination is made as to whether a rate-of-change of the relative humidity (∆RH/t) is greater than an RH threshold ($RH_{th}$). In one example given above, $RH_{th}$ is 0.02% RH per minute, but the inventive concepts are not limited to that specific example. In the case where ∆RH/t is not greater than $RH_{th}$, the process returns to operation S104 to continue monitoring of the status of the motor 104.

On the other hand, in the case where ∆RH/t is not greater than $RH_{th}$, the process proceeds to operation S110 to activate the water ingress alarm 112. In addition to activating the water ingress alarm 112, the process may include providing haptic feedback as described earlier and/or timestamp logging of the humidity and temperature data in nonvolatile memory.

It will be understood that operations S108 and S109 can be carried out in reverse order or simultaneously.

Although the embodiments of the inventive concepts are described above in the context of power tooth brushes (PTBs), the inventive concepts encompasses other personal care devices having embedded electronics in which water ingress into the devices can be problematic. Some nom-limiting examples include electric and pneumonic mouth brushes, oral irrigation systems, electronic shavers and trimmers, and so on.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. While representative embodiments are disclosed herein, one of ordinary skill in the art will appreciate that many variations that are in accordance with the present teachings are possible and remain within the scope of the appended claim set. The invention therefore is not to be restricted except within the scope of the appended claims.

**Claims**

1. A personal care device, comprising:

   a housing;
   a relative humidity sensor disposed within the housing; and
   a processor within the housing and configured to:

      monitor a rate of change of relative humidity within the housing using an output from the humidity sensor; and
      generate a water ingress alarm when the rate of change of relative humidity exceeds a predetermined first threshold.

2. The personal care device of claim 1, further comprising a temperature sensor disposed within the housing, wherein the processor is further configured to:

      monitor a rate of change of temperature within the housing using an output from the temperature sensor; and
      generate the water ingress alert only when both the rate of change of relative humidity exceeds the predetermined first threshold and the rate of change of temperature is below a predetermined second threshold.

3. The personal care device of claim 2, wherein the housing is a detachable handle of the personal care device.

4. The personal care device of claim 3, wherein the personal care device is a power toothbrush.

5. The personal care device of claim 2, wherein the relative humidity sensor, the temperature sensor and the processor are mounted on a printed circuit board assembly within the housing.

6. The personal care device of claim 2, further comprising a motor within the housing, wherein the processor is configured to monitor the rates of change of the relative humidity and the temperature when the motor is in an ON state.

7. The personal care device of claim 1, further comprising a pressure valve installed in the housing.

8. A power toothbrush comprising:

   a handle;
   a detachable brush head configured for detachable connection to the handle;

a water ingress seal at an interface between the handle and the brush head;
a relative humidity sensor contained within the handle;
a temperature sensor contained within the handle;
a processor operatively connected to the relative humidity sensor and the temperature sensor, and configured to generate a water ingress alarm when both a rate of change of relative humidity within the handle exceeds a first threshold and a rate of change of temperature within the handle is less than a second threshold.

9. The power toothbrush of claim 8, further comprising a non-volatile memory within the handle storing the first and second thresholds.

10. The power toothbrush of claim 9, further comprising a motor within the handle, wherein the processor is configured to:

retrieve the first and second thresholds from the non-volatile memory;
determine whether the motor is in an ON state;
in response to determining that the motor is in an ON state, determine the rate of change of relative humidity and the rate of change of temperature within the handle.

11. The power toothbrush of claim 10, wherein the processor is configured determine the rate of change of relative humidity and the rate of change of temperature within the handle by storing successive outputs of the relative humidity sensor and successive outputs of the temperature sensor in a memory buffer, and calculating the rate of change of relative humidity and the rate of change of temperature within the handle in response to the buffer memory becoming full.

12. The power toothbrush of claim 8, further comprising a pressure valve installed in the handle.

13. A method for detecting water ingress in a personal care device, comprising:

monitoring a rate of change of relative humidity within a housing of the personal care device using a humidity sensor; and
generating a water ingress alert when the rate of change of relative humidity exceeds a first threshold.

14. The method of claim 13, further comprising:
monitoring a rate of change of temperature within the housing using a temperature sensor; and generating the water ingress alert when both the rate of change of relative humidity exceeds the predetermined humidity threshold and the rate of change of temperature is below a second threshold.

15. The method of claim 14, wherein the personal care device is a power toothbrush, and the housing is a detachable handle of the power toothbrush, the handle including a pressure valve, a motor and circuitry for driving the motor.

FIG.1

FIG.2

FIG.3

FIG.4

RH and Temp after injecting 2 ml water inside empty sealed Cairo housing

$y = 0.1168x + 75$

FIG.5

EP 4 748 273 A1

FIG.6

Simulation of cold water rinse using empty handle; sensor in contact with housing

FIG.7

EP 4 748 273 A1

FIG.8

S11 — Monitor RH

S12

$\Delta RH/t > RH_{th}$ ? — NO

YES

S13 — Activate Alarm

# FIG.9

S21 — Monitor RH

S22 — ΔRH/t > $RH_{th}$ ?  NO

YES

S23 — ΔT/t < $T_h$ ?  NO

YES

S24 — Activate Alarm

# FIG.10

EP 4 748 273 A1

S103 — State of PTB motor from main PCBA

S101
- Temperature rate of change limit
- RH rate of change limit
- Volume of air inside PTB
- Local altitude (if available)

S102 — Load external data from flash or app.

S104 — Check motor status

S105 — Is temp rate over limit? — Yes / No

S106 — Log temp and RH data to buffer

S107 — When buffer is full calculate rate of changes for temp and RH.

S108 — Is temp rate over limit? — Yes / No

S109 — Is RH rate over limit? — No / Yes

S110 — Activate water ingress alarm; haptic feedback and log all data to flash with timedstamp

**FIG.11**

Europäisches
Patentamt
European
Patent Office
Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

EP 24 21 4610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 659 177 A (SHENZHEN SUSHI TECH CO LTD) 17 September 2024 (2024-09-17) | 1,7,13 | INV. A46B15/00 |
| A | * figures 1-8 * <br> * the whole document * | 2-6,14, 15 | |
| X | US 2021/204685 A1 (CHRISTENSEN JACOB [US] ET AL) 8 July 2021 (2021-07-08) | 1,7,13 | |
| A | * paragraph [0080] - paragraph [0089]; figures 1,10 * | 2-6,14, 15 | |
| A | CN 117 847 970 A (SHENZHEN CLOUDTOP INFORMATION TECH CO LTD) 9 April 2024 (2024-04-09) <br> * the whole document * | 1-7, 13-15 | |
| A | WO 2022/078561 A1 (COLOPLAST AS [DK]) 21 April 2022 (2022-04-21) <br> * the whole document * | 1-7, 13-15 | |
| A | JP 2013 123626 A (PANASONIC CORP) 24 June 2013 (2013-06-24) <br> * paragraph [0098] - paragraph [0105] * | 1-7, 13-15 | TECHNICAL FIELDS SEARCHED (IPC) <br><br> A46B <br> A61C |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

  see sheet C

| Place of search | Date of completion of the search | Examiner |
|---|---|---|
| The Hague | 14 April 2025 | Knoop, Jan |

Europäisches Patentamt

European Patent Office

Office européen des brevets

**INCOMPLETE SEARCH**
**SHEET C**

Application Number

EP 24 21 4610

Claim(s) completely searchable:
        1-7, 13-15

Claim(s) not searched:
        8-12

Reason for the limitation of the search:

1        Claims 1 and 8 have been drafted as separate independent claims in the same category.
1.1        Under Article 84 in combination with Rule 43(2) EPC an application may contain more than one independent claim in a particular category only if the subject matter claimed falls within one or more of the exceptional situations set out in paragraphs (a), (b) or (c) of Rule 43(2) EPC. This is not the case in the present application however, for the following reasons:
1.2        The independent claims do not relate to a plurality of inter-related products (e.g. in the way a plug and a socket can be inter-related) since they do not define co-operating features.
1.3        Further, the subject-matter of the independent claims does obviously not involve different uses of a product or apparatus, since none of the claims is directed to a use.
1.4        Further, the independent claims do not provide alternative solutions to a particular problem, where it is not appropriate to cover these alternatives in a single claim, since they relate effectively to the same subject-matter and differ from each other only in respect of the terminology used.
1.5        Consequently, the claims fail to comply with the requirements set by Article 84 in combination with Rule 43(2) EPC.
1.6        In their reply dated 10-04-2025, the applicant indicated claims 1-7 and 13-15 to be searched. Consequently, claims 8-12 have been excludes from the search.

## ANNEX TO THE EUROPEAN SEARCH REPORT
## ON EUROPEAN PATENT APPLICATION NO.

EP 24 21 4610

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | | Publication date | Patent family member(s) | | Publication date |
|---|---|---|---|---|---|
| CN 118659177 | A | 17-09-2024 | NONE | | |
| US 2021204685 | A1 | 08-07-2021 | NONE | | |
| CN 117847970 | A | 09-04-2024 | NONE | | |
| WO 2022078561 | A1 | 21-04-2022 | CN | 116348962 A | 27-06-2023 |
| | | | EP | 4229652 A1 | 23-08-2023 |
| | | | US | 2023410996 A1 | 21-12-2023 |
| | | | WO | 2022078561 A1 | 21-04-2022 |
| JP 2013123626 | A | 24-06-2013 | NONE | | |

EPO FORM P0459

For more details about this annex : see Official Journal of the European Patent Office, No. 12/82